# EUROPEAN PATENT SPECIFICATION

(11) **EP 3 924 610 B1**
(45) Date of publication and mention of the grant of the patent: **19.11.2025**
(21) Application number: 20708856.8
(22) Date of filing: 29.01.2020
(51) Int. Cl.: F02D 31/00, F02P 5/145

(54) **INTAKE MANIFOLD PRESSURE CONTROL STRATEGY**
DRUCKSTEUERUNGSSTRATEGIE FÜR EINLASSKRÜMMER
STRATÉGIE DE RÉGULATION DE PRESSION DE COLLECTEUR D'ADMISSION

(30) Priority: 02.04.2019 US 201962828112 P
(43) Date of publication of application: 22.12.2021
(73) Proprietor: Cummins, Inc., Columbus, Indiana 47201 (US)
(72) Inventor: SUDHAKARAN, Nandagopal Methil, Columbus, Indiana 47201 (US); GREER, Matthew, Columbus, Indiana 47201 (US); OSBURN, Andrew W., Nashville, Indiana 47448 (US); BAIZE, Scott R., Columbus, Indiana 47203 (US)
(74) Representative: Cleveland Scott York
(86) International application number: PCT/US2020/015647
(87) International publication number: WO 2020/205039

(56) References cited:
- GB-A- 2 406 920
- US-A1- 2006 107 925
- US-A1- 2009 076 708
- US-A1- 2013 311 069
- US-A1- 2019 040 806

## Description

### BACKGROUND

The present application relates to an intake manifold pressure control strategies and related apparatuses, methods, systems, and techniques. During operation of an internal combustion engine, lubrication oil may seep into the combustion chamber due to a pressure difference between the oil chamber and the combustion chamber. Depending on the magnitude of the intake manifold pressure, the combustion chamber, which also reflects this pressure during an intake stroke, may have a higher or lower pressure than the oil in the crankcase. If the oil pressure is higher than the combustion chamber pressure, oil may seep into the combustion chamber and be combusted which can lead to undesirable emissions including particulate emissions and may negatively impact the performance of exhaust aftertreatment system components. There remains a substantial unmet need for the unique apparatuses, methods, systems, and techniques disclosed herein. An example of a control system to address such problems is given by US2006/107925A1.

### DISCLOSURE OF EXAMPLE EMBODIMENTS

For the purposes of clearly, concisely and exactly describing example embodiments of the present disclosure, the manner and process of making and using the same, and to enable the practice, making and use of the same, reference will now be made to certain example embodiments, including those illustrated in the figures, and specific language will be used to describe the same. It shall nevertheless be understood that no limitation of the scope of the invention is thereby created and that the invention includes and protects such alterations, modifications, and further applications of the example embodiments as would occur to one skilled in the art.

### SUMMARY OF THE DISCLOSURE

Certain embodiments comprise unique systems for electronically controlling operation of an internal combustion engine according to an intake manifold pressure control strategy. Certain embodiments comprise unique methods for electronically controlling operation of an internal combustion engine according to an intake manifold pressure control strategy. Certain embodiments comprise unique apparatuses configured to electronically control operation of an internal combustion engine according to an intake manifold pressure control strategy. Further embodiments, forms, objects, features, advantages, aspects, and benefits shall become apparent from the following description and drawings.

### BRIEF DESCRIPTION OF THE DRAWINGS

Fig. 1 a schematic diagram illustrating certain aspects of an example engine system.
Figs. 2-4 are schematic diagrams illustrating certain aspects of example control circuitry and example control processes.

### DETAILED DESCRIPTION OF EXAMPLE EMBODIMENTS

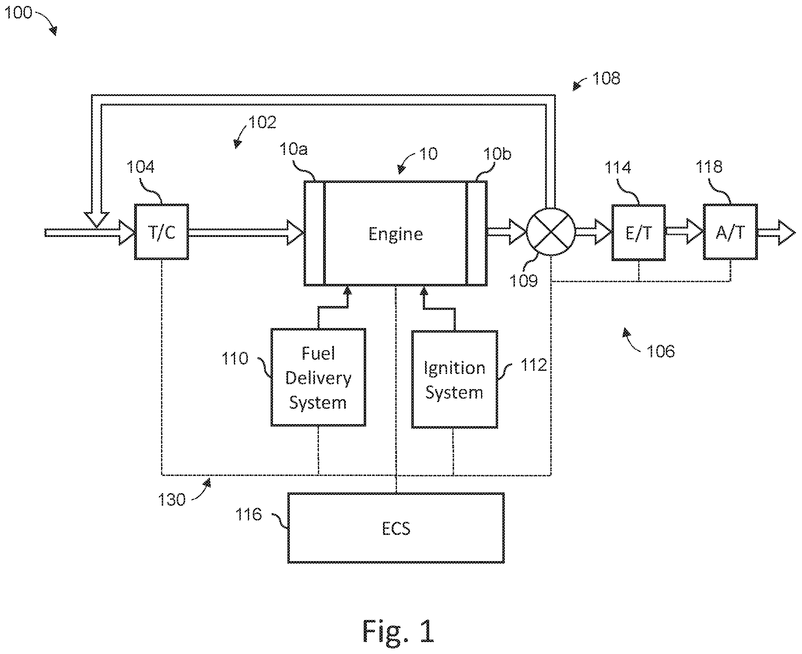

With reference to Fig. 1, there is illustrated an internal combustion engine system 100 (sometimes referred to herein as engine system 100 or system 100) according to one example embodiment. System 100 includes an engine 10 having an intake manifold 10a and an exhaust manifold 10b. In the illustrated embodiment, system 100 includes an intake system 102 fluidly coupled to the intake manifold 10a and configured to receive compressed intake gases from a turbocharger 104. In other embodiments, turbocharger 104 may alternatively be configured as a shaft driven compressor or supercharger or may be omitted in the case of a naturally aspirated engine.

Engine system 100 includes an EGR system 108 which is configured as a low-pressure loop EGR system 108 in the illustrated embodiment. In other embodiments, EGR system 108 may be configured as a high-pressure loop EGR system, an EGR system with selectable high pressure and low-pressure loops, or may be omitted. System 100 includes an exhaust throttle 114 which is controllable to selectably provide and vary back pressure and flow control for EGR system 108, but which may be omitted in other embodiments. Engine system 100 further includes an EGR valve 109 which may be positioned at a number of locations in the exhaust system 106 and operated to control recirculation of exhaust gasses output by the engine 10 to the intake of the engine 10. Engine system 100 further includes an exhaust aftertreatment system 118 which receives exhaust from engine 10 via other elements of exhaust system 106 and may include one or more catalysts for mitigation of emissions including, for example, hydrocarbons, NOx, or particulates.

Engine system 100 includes a fuel delivery system 110 operationally coupled to the engine 10. Fuel delivery system 110 may be provided in a number of forms, for example, a natural gas system or other gaseous fuel systems, a gasoline system, or a dual-fuel system. When provided as a dual fuel system, fuel delivery 110 system may be configured to provide multiple fuels to the combustion chamber, for example, gaseous fuel and liquid fuel. In such systems, combustion may be controlled by injection of the liquid fuel to the combustion cylinder to ignite the gaseous fuel. Fuel delivery system 110 may utilize port fuel injection and/or direct injection. Engine system 100 further includes an ignition system 112 which may comprise one or more spark plugs and associated controls, and/or, one or more in-cylinder injectors, for example, in the case of a dual-fuel engine.

Engine system 100 includes an electronic control system (ECS) 116 which includes control circuitry configured to control a number of operational aspects of engine system 100. The control circuity of ECS 116 may be provided in a number of forms and combinations. In some embodiments, the control circuitry of ECS 116 may be provided in whole or in part by one or more microprocessors, microcontrollers, other integrated circuits, or combinations thereof which are configured to execute instructions stored in a non-transitory memory medium, for example, in the form of stored firmware and/or stored software. It shall be appreciated microprocessor, microcontroller and other integrated circuit implementations of the control circuitry disclosed herein may comprise multiple instances of control circuitry which utilize common physical circuit elements. For example, first control circuitry may be provided by a combination of certain processor circuitry and first memory circuitry, and second control circuitry may be provided by a combination of, at least in part, that certain processor circuitry and second memory circuitry differing from the first memory circuitry. It shall be appreciated, for example, that first control circuitry according to the present disclosure may be intake pressure control circuitry as disclosed herein and second control circuitry according to the present disclosure may be feedback controller settings control circuitry as disclosed herein.

It shall be further appreciated that the control circuitry of ECS 116 may additionally or alternatively comprise other digital circuitry, analog circuitry, or hybrid analog-digital circuitry or combinations thereof. Some non-limiting example elements of such circuitry include application specific integrated circuits (ASICs), arithmetic logic units (ALUs), amplifiers, analog calculating machine(s), analog to digital (A/D) and digital to analog (D/A) converters, clocks, communication ports, field programmable gate arrays (FPGAs), filters, format converters, modulators or demodulators, multiplexers and de-multiplexers, non-transitory memory devices and media, oscillators, processors, processor cores, signal conditioners, state machine(s), and timers. As with microprocessor, microcontroller and other integrated circuit implementations, such alternate or additional implementations may implement or utilize multiple instances of control circuitry which utilize common physical circuit elements. For example, first control circuitry may be provided by a combination of first control circuitry elements and second control circuitry elements, and second control circuitry may be provided by a combination of the first control circuitry elements and third control circuitry elements differing from the first control circuitry elements.

ECS 116 may be provided as a single component or a collection of operatively coupled components. When of a multi-component form, ECS 116 may have one or more components remotely located relative to the others in a distributed arrangement and may distribute the control function across one or more control units or devices. In some embodiments, ECS 116 may comprise multiple electronic control modules (ECMs) or electronic communication units (ECUs) configured to operatively communicate over one or more networks such as one or more controller area networks (CANs). ECS 116 is also communicatively coupled to a number of components of the engine control system 100 via communication network 130. Example communication connections are illustrated in Fig. 1, although in any given embodiment connections illustrated may not be present, and/or additional connections may be present.

Engine system 100 may be provided and utilized in a number of applications. In some embodiments, engine system 100 may be configured to power to a vehicle such as a car or other type of passenger vehicle, a hybrid drive vehicle, a truck or other type of work vehicle or machine, a marine vessel, or an aircraft. In some embodiments, engine system 100 may be configured to power to a non-vehicle load, for example, a generator set, a compressor, or a pump to name several examples.

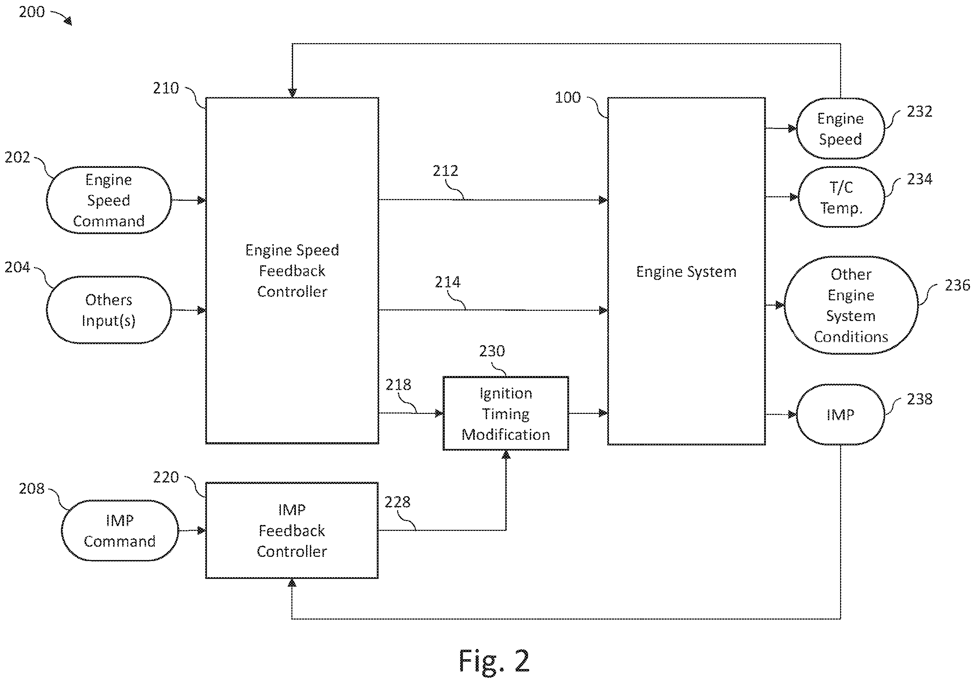

With reference to Fig. 2, there is illustrated control circuitry 200 which may be implemented in one or more ECUs or other devices of an electronic control system such as ECS 116 or various other electronic control systems and which may be used in controlling the operation of an engine system such as engine system 100. Although various features and operations of the embodiments of Figs. 2-4 may be described in connection with engine system 100, it shall be appreciated that the disclosed embodiments may also be implemented in and utilized in connection with various other electronic control systems and various other engine systems.

During operation of engine system 100, a number of engine system operating parameters or values may be determined. Such determination may utilize one or more physical sensors, virtual sensors, controller-based approximations, estimations or simulations, combinations thereof, or other techniques for determining engine system operating parameters or values as would occur to one of skill in the art with the benefit of the present disclosure. In the illustrated embodiment the determined operating parameters or values include engine speed 232, turbocharger temperature 234 (e.g., turbine inlet temperature, turbine outlet temperature or another turbocharger temperature), intake manifold pressure (IMP) 238, and may also include other engine system operating conditions 236.

It shall be appreciated that parameters or values such as engine speed 232, turbocharger temperature 234, IMP 238, and other engine system operating conditions 236 are indicative of the actual or current operating conditions of engine system 100 and may be provided as feedback inputs to the disclosed control circuity. Thus, for example, engine speed 232 is one example of an actual or current engine speed although in practice factors such as measurement error, communication and processing latency or delay and other factors may result in variation between engine speed 232 and the precise, instantaneous physical speed of the engine of which it is indicative. Likewise, IMP 238 is one example of an actual or current intake manifold pressure although the foregoing factors may result in variation IMP 238 and the precise, instantaneous physical pressure of the intake manifold of which it is indicative. The same is also true of turbocharger temperature 234 relative to the precise, instantaneous physical temperature of the turbocharger of which it is indicative, and of other engine system operating conditions 236 relative to the precise, instantaneous physical engine system attributes of which they are indicative. It shall further be appreciated that the magnitude of parameters or values such as engine speed 232, turbocharger temperature 234, IMP 238, and other engine system operating conditions 236 may vary dynamically over time. Thus, for example, the current engine speed used at different points of operation may the same value as the current engine speed used at other operating points or may the two may vary in magnitude. The same is true of turbocharger temperature 234, IMP 238, and other engine system operating conditions 236.

Control circuitry 200 comprises an engine speed feedback controller 210 which is configured to receive engine speed command 202 and engine speed 232 as inputs. Engine speed command 202 may be determined in response to an engine idle speed input, which may establish a baseline or minimum engine speed either as a predetermined value or a value which is dynamically determined based on one or more engine system operating conditions and/or environmental conditions. Engine speed command 202 may also be determined in response to inputs received from operator controls such as an accelerator pedal or a cruise control system which may increase engine speed above the value established by the engine idle speed input. In some embodiments engine speed feedback controller 210 may also receive various other inputs 204 which may include other command inputs, other feedback inputs, or combinations thereof.

Engine speed feedback controller 210 determines an engine fueling command 212 in response to its received inputs and provides the engine fueling command 212 to control operation of a fuel delivery system such as fuel delivery system 110 of engine system 100. It shall be appreciated that for certain purposes engine fueling command 212 may be treated as an engine torque parameter or value given a proportional relationship between engine fueling and engine torque. It shall be further appreciated engine fueling command 212 is one example of a torque or fueling control parameter and may be referred to accordingly.

Engine speed feedback controller 210 may also determine an ignition timing command 218 in response to its received inputs and provides the ignition timing command 218 to ignition timing modification control circuity 230 which, in turn, modifies the ignition timing command and provides a modified ignition timing command to control operation of an ignition system such as ignition system 112 of engine system 100. In some embodiments, the ignition timing command and the modified ignition timing command may comprise one or more spark plug firing timing parameters or values. In some embodiments, such as in the case of a dual-fuel engine which ignites a gaseous fuel with an injection of liquid fuel to the combustion cylinder, the ignition timing command and the modified ignition timing command may comprise one or more injection timing parameters or values.

In some embodiments engine speed feedback controller 210 may not determine an ignition timing command 218 or may not provide the ignition timing command 218 ignition timing modification control circuity 230. In such embodiments, ignition timing modification control circuity 230 provides a modified ignition timing command to control operation of an ignition system such as ignition system 112 of engine system 100 without requiring input from engine speed feedback controller 210. Even where the ignition timing modification control circuity 230 does not explicitly modify a received input, it may still be considered to provide a modified ignition timing command which varies or diverges from a nominal ignition timing command that would be utilized in conventional operation of an engine system. In such conventional operation, nominal ignition timing is typically controlled or determined to maximize or optimize combustion efficiency to the extent practicable for a given set of operating and/or environmental.

In some embodiments, engine speed feedback controller 210 may also be configured to determine other commands 214 which may be provided to control operation of various other devices and systems associated with engine system100. The other commands 214 may include air-handling commands (such as intake throttle position, exhaust throttle position, turbocharger geometry, and turbocharger wastegate position), aftertreatment system commands, and various other commands for engine system 100 as will be appreciated by one of skill in the art with the benefit of the present disclosure. In some embodiments, one or more of the other commands may be provided by additional controllers which operate in combination with engine speed feedback controller 210.

In some embodiments, engine speed feedback controller 210 may be configured as a proportional-integral (PI) controller or a proportional-integral-derivative (PID) controller. Such controllers may comprise control circuitry configured to determine a difference between engine speed command 202 and engine speed 232, provide the difference to a proportional operator with an associated proportional gain, an integral operator with an associated integral gain, and, in the case of a PID controller, a derivative operator with an associated derivative gain. Such controllers may be configured to determine and output one or more commands in response to the output provided by the proportional operator, the integral operator, and, where present, the derivative operator, such as engine fueling command 212, ignition timing command 218, or other commands 214. In other embodiments, engine speed feedback controller 210 may be configured as another type of feedback controller.

It shall be appreciated that engine speed feedback controller 210 is but one example of feedback controller configured to receive as inputs a commanded engine speed and a feedback engine speed and in response to the inputs provide an engine fueling command and that other types of feedback controllers comprising additional and/or alternative features may be utilized in other embodiments. It shall be further appreciated that combinations and modifications of the disclosed embodiments are also contemplated.

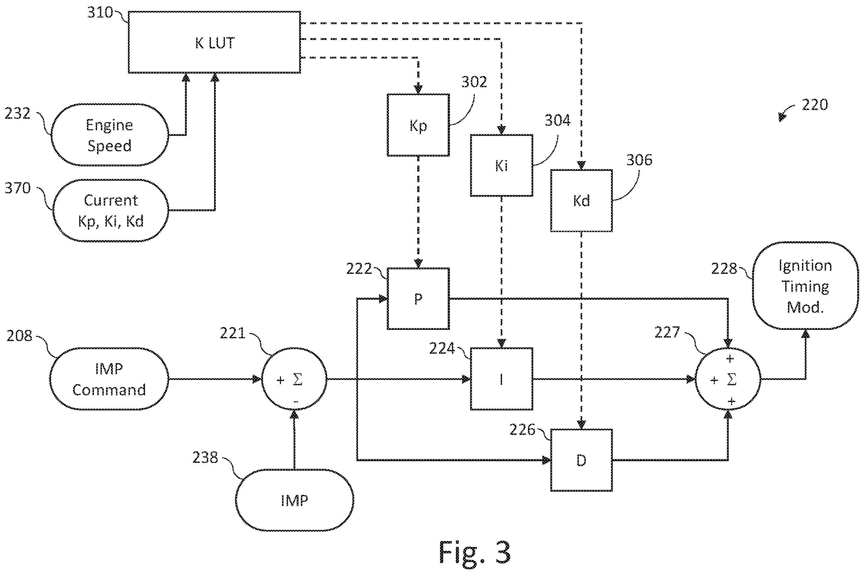

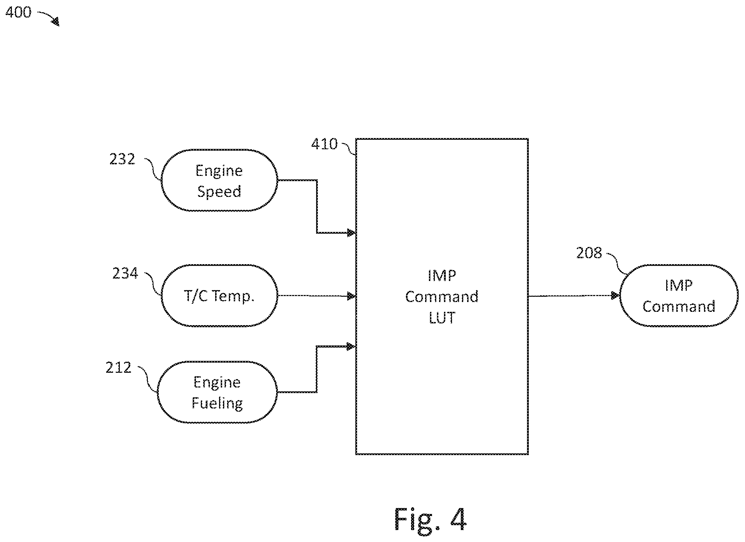

Control circuitry 200 comprises an intake manifold pressure (IMP) feedback controller 220 which is configured to receive IMP command 208 and IMP 238 as inputs and to provide an ignition timing modification command 228 to ignition timing modification control circuity 230 in response to its received inputs. The ignition timing modification command 228 may be utilized by ignition timing modification control circuity 230 to explicitly modify another received input, such as, or to otherwise vary ignition timing relative to nominal or conventional ignition timing for a given set of operating and/or environmental conditions. Further aspects of IMP feedback controller 220 and its control circuitry are illustrated and described in connection with Fig. 3, and further aspects of control circuitry utilized to determine IMP command 208 are illustrated and described in connection with Fig. 4.

With reference to Fig. 3 there are illustrated further example aspects of IMP feedback controller 220. In the illustrated embodiment, IMP feedback controller 220 is configured as a PID controller comprising operator 221 which is configured to receive IMP command 208 and IMP 238 as inputs, and determine and provide as output a difference between its received inputs. The difference output by operator 221 is provided to proportional operator 222, integral operator 224, and differential operator 226. Proportional operator 222, integral operator 224, and differential operator 226 also respectively receive proportional gain setting (Kp) 302, integral gain setting (Ki) 304, and differential gain setting (Kd) 306. In some embodiments, the differential gain setting (Kd) 306 may be set to zero so that IMP feedback controller 220 effectively operates as a PI controller. In some embodiments, IMP feedback controller 220 may be provided as a PI controller which omits differential operator 226 and Kd 306. Proportional operator 222, integral operator 224, and differential operator 226 determine respective outputs in response to their received inputs and provide these outputs to operator 227 which adds or otherwise combines them to determine and provide as output ignition timing modification command 228.

It shall be appreciated that IMP feedback controller 220 is but one example of a feedback controller configured to receive as inputs a commanded intake pressure and feedback intake pressure and in response to the inputs to provide an ignition timing modification command. In other embodiments, IMP feedback controller 220 may be configured as another type of feedback controller such as an adaptive controller, for example, an adaptive controller configured to utilize parameter estimation or system identification techniques. It shall be further appreciated that an ignition timing modification command may be configured to vary ignition timing in a number of manners. For example, ignition timing may be modified by delaying or retarding its timing relative to a nominal ignition timing provided by a conventional control system. This control technique may be effective to increase intake pressure such as intake manifold pressure while reducing combustion efficiency which may be considered a counterintuitive technical solution relative to conventional wisdom in the art.

As further illustrated in Fig. 3, gain settings Kp 302, Ki 304, and Kd 306 (where utilized) may be dynamically determined and adjusted or modified during operation of IMP feedback controller 220. In the illustrated embodiment, gain settings Kp 302, Ki 304, and Kd 306 are determined by control circuitry 310 which is configured to receive engine speed 323 and current gain settings 370 which represent the current or most recent values for gain settings Kp 302, Ki 304, and Kd 306. Control circuitry 310 is configured as multi-dimensional (2 x 3 in the illustrated embodiment) look-up table (LUT) which correlates different values for gain settings Kp 302, Ki 304, and Kd 306 with different values of engine speed 323 and current gain settings 234. In certain embodiments, the correlation between the inputs and outputs of control circuitry 310 comprises a non-linear relationship. In certain embodiments control circuitry 310 may be structured to reduce the effect of gain settings Kp 302, Ki 304, and Kd 306 as engine speed or engine load increase. This reduction may occur in a non-linear manner. The relationship between the inputs and outputs of control circuitry 310 may be empirically determined and may account for situations in which relatively small variations in gain settings Kp 302, Ki 304, and Kd 306 produce relatively large variations in intake manifold pressure and engine speed. The gain settings may be tuned for greatest effect at or near engine idle conditions and, as engine speed increases, the gains settings may be adjusted to provide increased integrator leakage so that the integral operator can wind down. Concurrently, the error may be transitioned from its current state to zero in order to suppress the PI/PID effect and smooth transition out of feedback control.

It shall be appreciated that control circuitry 310 is one example of control circuity configured to determine feedback controller settings for the second feedback controller. In other embodiments may utilize other types of control circuitry, additional, alternate or fewer inputs, and/or control circuitry configured to perform operations other than look-up table operations, for example, calculations, computations, estimations, interpolations, or various other logical or processing operations as would occur to those of skill in the art with the benefit of the present disclosure.

With reference to Fig. 4, there is illustrated control circuitry 400 which may be implemented in one or more devices of an electronic control system such as ECS 116 of system 100 or various other electronic control systems and which may be used in controlling the operation of an engine system such as engine system 100. Control circuitry 400 comprises intake manifold pressure command determination logic 410. In the illustrated embodiment, intake manifold pressure command determination block 410 comprises a look-up table (LUT) configured to receive as inputs engine speed 232, turbocharger temperature 234, and engine fueling command 112 and configured to determine and provide as an output IMP command 208 in response to these inputs.

The LUT of intake manifold pressure command determination block 410 may be implemented in one or more non-transitory controller-accessible memory media and may be configured to store values which are empirically determined to control engine-out particulate generated by combustion. Thus, a correlation between ignition timing and a particle number or other emissions requirement may be determined from statistical data based on running the operating condition. Such values may be empirically determined, for example, using techniques such as multivariate regression, correlation, and/or dependence analyses. In such analyses intake manifold pressure may be treated as a controllable variable, a plurality of other variables (e.g., engine speed and engine torque or fueling and/or additional or alternate variables) may be treated as uncontrollable variables, engine operation may be controlled at a plurality of operating points using different values for the controllable and uncontrollable variables, and the resulting engine-out particulate production may be evaluated and utilized as a basis for selecting desired intake manifold pressure values for different operating engine operating points.

It shall be appreciated that in other embodiments intake manifold pressure command determination block 410 may comprise a different number of inputs configured to receive additional, alternate or fewer inputs, for example, one or both of turbocharger temperature 234 and engine fueling command 112 may be omitted or may not be utilized as inputs. It also be appreciated that manifold pressure command determination block 410 may alternatively or additionally be configured to perform operations other than look-up table operations, for example, calculations, computations, estimations, interpolations, or various other logical or processing operations as would occur to those of skill in the art with the benefit of the present disclosure. It shall be further appreciated that manifold pressure command determination block 410 is one example of an aspect of control circuitry configured to determine a commanded intake pressure and that other embodiments may utilize additional or alternate intake system pressures.

Certain embodiments disclosed herein are configured to and/or effective to modify operation of an internal combustion engine system relative to a nominal or conventional operating scheme. For example, operation of the first feedback controller, the second feedback controller, the first control circuitry, and the second control circuitry is effective to one or more of: reduce the efficiency of the engine below one of a nominal engine efficiency or a maximized engine efficiency, reduce or mitigate seepage of oil into a combustion chamber of the engine, and increase pressure in the combustion chamber during an intake stroke. Furthermore, the commanded intake pressure and the feedback controller settings are selected to one or more of: reduce the efficiency of the engine below one of a nominal engine efficiency or a maximized engine efficiency, reduce or mitigate seepage of oil into a combustion chamber of the engine, and increase pressure in the combustion chamber during an intake stroke. While not so limited, these technical effects may be realized during engine idle operation or other low load engine operation.

A number of example embodiments and example forms thereof shall now be further described. A first embodiment is a system for electronically controlling operation of an internal combustion engine. In a first form of the first embodiment, the system comprises: a first feedback controller configured to receive as inputs a commanded engine speed and an engine speed and in response to the inputs provide an engine fueling command; a second feedback controller configured to receive as inputs a commanded intake pressure and feedback intake pressure and in response to the inputs to provide an ignition timing modification command; intake pressure control circuitry configured to determine the commanded intake pressure in response to the engine speed; and feedback controller settings control circuity configured to determine feedback controller settings for the second feedback controller.

In a second form of the first embodiment, the features of the first form are present and the commanded intake pressure and the feedback controller settings are selected to one or more of: (a) reduce the efficiency of the engine below a nominal engine efficiency or a maximized engine efficiency; (b) reduce or mitigate seepage of oil into a combustion chamber of the engine; and (c) increase pressure in the combustion chamber during an intake stroke.

In a third form of the first embodiment, the features of one or both of the first form and the second form are present and the first feedback controller is configured to provide an ignition timing command in response to the inputs, and the ignition timing command is modified by ignition timing modification circuitry using the ignition timing modification command.

In a fourth form of the first embodiment, the features of any one or more of the first through third forms are present and the first control circuity is configured to determine the commanded intake pressure in response to one or both of a turbocharger temperature and an engine torque or fueling input.

In a fifth form of the first embodiment, the features of any one or more of the first through fourth forms are present and the feedback controller settings control circuity is configured to repeatedly determine feedback controller settings for the second feedback controller in response to the engine speed input and current feedback controller settings.

In a sixth form of the first embodiment, the features of any one or more of the first through fifth forms are present and one of: (a) the second feedback controller is a proportional-integral (PI) controller and the feedback controller settings control circuity is configured to repeatedly determine values of a proportional gain setting (Kp) and an integral gain setting (Ki) in response to the engine speed, a current Kp value, and a current Ki value, and (b) the second feedback controller is a proportional-integral-derivative (PID) controller and the feedback controller settings control circuity is configured to repeatedly determine values of a proportional gain setting (Kp), an integral gain setting (Ki), and a derivative gain setting (Kd) in response to the engine speed input, a current Kp value, a current Ki value, and a current Kd value.

In a seventh form of the first embodiment, the features of any one or more of the first through sixth forms are present and the feedback controller settings are non-linear with respect to the engine speed.

In an eighth form of the first embodiment, the features of any one or more of the first through seventh forms are present and the commanded intake pressure is a commanded intake manifold pressure and the feedback intake pressure is a feedback intake manifold pressure.

In a ninth form of the first embodiment, the features of any one or more of the first through eighth forms are present and the system further comprises the internal combustion engine system.

In a tenth form of the first embodiment, the features of the ninth form are present and the internal combustion engine system comprises a spark-ignited engine including one or more spark plugs.

A second embodiment is a method for electronically controlling operation of an internal combustion engine. In a first form of the second embodiment, the method comprises: operating a first feedback controller to receive as inputs a commanded engine speed and an engine speed and in response to the inputs to provide an engine fueling command; operating a second feedback controller to receive as inputs a commanded intake pressure and feedback intake pressure and in response to the inputs to provide an ignition timing modification command; operating intake pressure control circuitry to determine the commanded intake pressure in response to the engine speed; and operating feedback controller settings control circuity to determine feedback controller settings for the second feedback controller.

In a second form of the second embodiment, the features of the first form are present and the operation of the first feedback controller, the second feedback controller, the intake pressure control circuitry, and the second control circuitry is effective to one or more of: (a) reduce the efficiency of the engine below a nominal engine efficiency or a maximized engine efficiency; (b) reduce or mitigate seepage of oil into a combustion chamber of the engine; and (c) increase pressure in the combustion chamber during an intake stroke.

In a third form of the second embodiment, the features of one or both of the first form and the second form are present and the act of operating the first feedback controller includes providing an ignition timing command in response to the inputs, and modifying the ignition timing command using the ignition timing modification command.

In a fourth form of the second embodiment, the features of any one or more of the first through third forms are present and the act of operating the first control circuity includes determining the commanded intake pressure in response to one or both of a turbocharger temperature and an engine torque or fueling input.

In a fifth form of the second embodiment, the features of any one or more of the first through fourth forms are present and the act of operating the feedback controller settings control circuity includes repeatedly determine feedback controller settings for the second feedback controller in response to the engine speed input and current feedback controller settings.

In a sixth form of the second embodiment, the features of any one or more of the first through fifth forms are present and the act of operating the feedback controller settings control circuity includes repeatedly determine values of a proportional gain setting (Kp) and an integral gain setting (Ki) in response to the engine speed, a current Kp value, and a current Ki value.

In a seventh form of the second embodiment, the features of any one or more of the first through sixth forms are present and the feedback controller settings are non-linear with respect to the engine speed.

In an eighth form of the second embodiment, the features of any one or more of the first through seventh forms are present and the commanded intake pressure is a commanded intake manifold pressure and the feedback intake pressure is a feedback intake manifold pressure.

A third example embodiment is an apparatus comprising one or more non-transitory controller- readable memory media configured to store instructions executable by an electronic control system to perform the methods of any of the forms of the second example embodiment.

It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A system (100) for electronically controlling operation of an internal combustion engine (10), the system (100) comprising:
a first feedback controller (210) configured to receive as inputs a commanded engine speed (202) and an engine speed (232) and in response to the inputs provide an engine fueling command;
a second feedback controller (220) configured to receive as inputs a commanded intake pressure (208) and feedback intake pressure (238) and in response to the inputs to provide an ignition timing modification command;
intake pressure control circuitry configured to determine the commanded intake pressure (208) in response to the engine speed (232); and
feedback controller settings control circuity configured to repeatedly determine feedback controller settings for the second feedback controller (220) in response to the engine speed (232) and current feedback controller settings.

2. The system of claim 1 wherein the commanded intake pressure (208) and the feedback controller settings are selected to one or more of:
(a) reduce the efficiency of the engine (10) below a nominal engine efficiency or a maximized engine efficiency;
(b) reduce or mitigate seepage of oil into a combustion chamber of the engine (10); and
(c) increase pressure in the combustion chamber during an intake stroke.

3. The system of claim 1 wherein the first feedback controller (210) is configured to provide an ignition timing command in response to the inputs, and the ignition timing command is modified by ignition timing modification circuitry using the ignition timing modification command.

4. The system of claim 1 wherein the [[first]] intake pressure control circuity is configured to determine the commanded intake pressure (208) in response to one or both of a turbocharger temperature and an engine torque or fueling input.

5. The system of any of claims 1-4 wherein one of:
(a) the second feedback controller (220) is a proportional-integral (PI) controller and the feedback controller settings control circuity is configured to repeatedly determine values of a proportional gain setting (Kp) and an integral gain setting (Ki) in response to the engine speed (232), a current Kp value, and a current Ki value, and
(b) the second feedback controller (220) is a proportional-integral-derivative (PID) controller and the feedback controller settings control circuity is configured to repeatedly determine values of a proportional gain setting (Kp), an integral gain setting (Ki), and a derivative gain setting (Kd) in response to the engine speed input, a current Kp value, a current Ki value, and a current Kd value.

6. The system of any of claims 1-4 wherein at least one of:
the feedback controller settings are non-linear with respect to the engine speed (232); and
the commanded intake pressure is a commanded intake manifold pressure and the feedback intake pressure is a feedback intake manifold pressure.

7. The system of any of claim 1-4 further comprising the internal combustion engine system (100).

8. The system of claim 7, wherein the internal combustion engine system (100) comprises a spark-ignited engine including one or more spark plugs.

9. A method for electronically controlling operation of an internal combustion engine (202), the method comprising:
operating a first feedback controller (210) to receive as inputs a commanded engine speed (202) and an engine speed (232) and in response to the inputs to provide an engine fueling command;
operating a second feedback controller (220) to receive as inputs a commanded intake pressure (208) and feedback intake pressure (238) and in response to the inputs to provide an ignition timing modification command;
operating intake pressure control circuitry to determine the commanded intake pressure (208) in response to the engine speed (232); and
operating feedback controller settings control circuity to repeatedly determine feedback controller settings for the second feedback controller (220) in response to the engine speed (232) and current feedback controller settings.

10. The method of claim 9, wherein the operation of the first feedback controller (210), the second feedback controller (220), the intake pressure control circuitry, and the second control circuitry is effective to one or more of:
(a) reduce the efficiency of the engine (10) below a nominal engine efficiency or a maximized engine efficiency;
(b) reduce or mitigate seepage of oil into a combustion chamber of the engine (10); and
(c) increase pressure in the combustion chamber during an intake stroke.

11. The method of claim 9, wherein the act of operating the first feedback controller (210) includes providing an ignition timing command in response to the inputs, and modifying the ignition timing command using the ignition timing modification command.

12. The method of claim 10 wherein the act of operating the [[first]] intake pressure control circuity includes determining the commanded intake pressure (208) in response to one or both of a turbocharger temperature and an engine torque or fueling input.

13. The method of any of claims 9-12, wherein at least one of:
the act of operating the feedback controller settings control circuity includes repeatedly determine feedback controller settings for the second feedback controller (220) in response to the engine speed input and current feedback controller settings; and
the act of operating the feedback controller settings control circuity includes repeatedly determine values of a proportional gain setting (Kp) and an integral gain setting (Ki) in response to the engine speed (232), a current Kp value, and a current Ki value.

14. The method of any of claims 9-12, wherein at least one of:
the feedback controller settings are non-linear with respect to the engine speed (232); and
the commanded intake pressure (208) is a commanded intake manifold pressure and the feedback intake pressure (238) is a feedback intake manifold pressure.

## Patentansprüche

1. System (100) zum elektronischen Steuern des Betriebs eines Verbrennungsmotors (10), wobei das System (100) umfasst:
eine erste Rückkopplungssteuerung (210), die konfiguriert ist, um eine befohlene Motordrehzahl (202) und eine Motordrehzahl (232) als Eingaben zu empfangen und als Reaktion auf die Eingaben einen Motorbetankungsbefehl bereitzustellen;
eine zweite Rückkopplungssteuerung (220), die konfiguriert ist, um einen befohlenen Ansaugdruck (208) und einen Rückkopplungsansaugdruck (238) als Eingaben zu empfangen und als Reaktion auf die Eingaben einen Zündzeitpunktmodifizierungsbefehl bereitzustellen;
eine Ansaugdrucksteuerschaltung, die konfiguriert ist, um den befohlenen Ansaugdruck (208) als Reaktion auf die Motordrehzahl (232) zu bestimmen; und
eine Steuerschaltung für Rückkopplungssteuerungseinstellungen, die konfiguriert ist, um wiederholt Rückkopplungssteuerungseinstellungen für die zweite Rückkopplungssteuerung (220) als Reaktion auf die Motordrehzahl (232) und die aktuellen Rückkopplungssteuerungseinstellungen zu bestimmen.

2. System nach Anspruch 1, wobei der befohlene Ansaugdruck (208) und die Rückkopplungssteuerungseinstellungen ausgewählt werden, um eines oder mehrere der Folgenden zu erreichen:
(a) Reduzieren des Wirkungsgrades des Motors (10) unter einen nominalen Motorwirkungsgrad oder einen maximalen Motorwirkungsgrad;
(b) Reduzieren oder Abschwächen des Austretens von Öl in eine Brennkammer des Motors (10); und
(c) Erhöhen des Drucks in der Brennkammer während eines Ansaugtaktes.

3. System nach Anspruch 1, wobei die erste Rückkopplungssteuerung (210) konfiguriert ist, um einen Zündzeitpunktbefehl als Reaktion auf die Eingaben bereitzustellen, und der Zündzeitpunktbefehl durch eine Zündzeitpunktmodifizierungsschaltung unter Verwendung des Zündzeitpunktmodifizierungsbefehls modifiziert wird.

4. System nach Anspruch 1, wobei die Ansaugdrucksteuerschaltung konfiguriert ist, um den befohlenen Ansaugdruck (208) als Reaktion auf eine Turboladertemperatur und/oder eine Motordrehmoment- oder Motorbetankungseingabe zu bestimmen.

5. System nach einem der Ansprüche 1 bis 4, wobei eines der Folgenden erfüllt ist:
(a) die zweite Rückkopplungssteuerung (220) ist eine Proportional-Integral- (PI) Steuerung und die Steuerschaltung für Rückkopplungssteuerungseinstellungen ist konfiguriert, um wiederholt Werte einer Proportionalverstärkungseinstellung (Kp) und einer Integralverstärkungseinstellung (Ki) als Reaktion auf die Motordrehzahl (232), einen aktuellen Kp-Wert und einen aktuellen Ki-Wert zu bestimmen, und
(b) die zweite Rückkopplungssteuerung (220) ist eine Proportional-Integral-Ableitungs-(PID) Steuerung und die Steuerschaltung für Rückkopplungssteuerungseinstellungen ist konfiguriert, um wiederholt Werte einer Proportionalverstärkungseinstellung (Kp), einer Integralverstärkungseinstellung (Ki) und einer Ableitungsverstärkungseinstellung (Kd) als Reaktion auf die Motordrehzahleingabe, einen aktuellen Kp-Wert, einen aktuellen Ki-Wert und einen aktuellen Kd-Wert zu bestimmen.

6. System nach einem der Ansprüche 1 bis 4, wobei mindestens eines der Folgenden erfüllt ist:
die Rückkopplungssteuerungseinstellungen sind nichtlinear in Bezug auf die Motordrehzahl (232); und
der befohlene Ansaugdruck ist ein befohlener Ansaugkrümmerdruck und der Rückkopplungsansaugdruck ist ein Rückkopplungsansaugkrümmerdruck.

7. System nach einem der Ansprüche 1 bis 4, ferner umfassend das Verbrennungsmotorsystem (100).

8. System nach Anspruch 7, wobei das Verbrennungsmotorsystem (100) einen funkengezündeten Motor einschließlich einer oder mehrerer Zündkerzen umfasst.

9. Verfahren zum elektronischen Steuern des Betriebs eines Verbrennungsmotors (202), wobei das Verfahren umfasst:
Betreiben einer ersten Rückkopplungssteuerung (210), um eine befohlene Motordrehzahl (202) und eine Motordrehzahl (232) als Eingaben zu empfangen und als Reaktion auf die Eingaben einen Motorbetankungsbefehl bereitzustellen;
Betreiben einer zweiten Rückkopplungssteuerung (220), um einen befohlenen Ansaugdruck (208) und einen Rückkopplungsansaugdruck (238) als Eingaben zu empfangen und als Reaktion auf die Eingaben einen Zündzeitpunktmodifizierungsbefehl bereitzustellen;
Betreiben einer Ansaugdrucksteuerschaltung, um den befohlenen Ansaugdruck (208) als Reaktion auf die Motordrehzahl (232) zu bestimmen; und
Betreiben einer Steuerschaltung für Rückkopplungssteuerungseinstellungen, um wiederholt Rückkopplungssteuerungseinstellungen für die zweite Rückkopplungssteuerung (220) als Reaktion auf die Motordrehzahl (232) und die aktuellen Rückkopplungssteuerungseinstellungen zu bestimmen.

10. Verfahren nach Anspruch 9, wobei der Betrieb der ersten Rückkopplungssteuerung (210), der zweiten Rückkopplungssteuerung (220), der Ansaugdrucksteuerschaltung und der zweiten Steuerschaltung eine oder mehrere der folgenden Wirkungen hat:
(a) Reduzieren des Wirkungsgrades des Motors (10) unter einen nominalen Motorwirkungsgrad oder einen maximalen Motorwirkungsgrad;
(b) Reduzieren oder Abschwächen des Austretens von Öl in eine Brennkammer des Motors (10); und
(c) Erhöhen des Drucks in der Brennkammer während eines Ansaugtaktes.

11. Verfahren nach Anspruch 9, wobei der Vorgang des Betreibens der ersten Rückkopplungssteuerung (210) das Bereitstellen eines Zündzeitpunktbefehls als Reaktion auf die Eingaben und das Modifizieren des Zündzeitpunktbefehls unter Verwendung des Zündzeitpunktmodifizierungsbefehls einschließt.

12. Verfahren nach Anspruch 10, wobei der Vorgang des Betreibens der Ansaugdrucksteuerschaltung das Bestimmen des befohlenen Ansaugdrucks (208) als Reaktion auf eine Turboladertemperatur und/oder eine Motordrehmoment- oder Motorbetankungseingabe einschließt.

13. Verfahren nach einem der Ansprüche 9 bis 12, wobei mindestens eines der Folgenden erfüllt ist:
der Vorgang des Betreibens der Steuerschaltung für Rückkopplungssteuerungseinstellungen schließt das wiederholte Bestimmen der Rückkopplungssteuerungseinstellungen für die zweite Rückkopplungssteuerung (220) als Reaktion auf die Motordrehzahleingabe und die aktuellen Rückkopplungssteuerungseinstellungen ein; und
der Vorgang des Betreibens der Steuerschaltung für Rückkopplungssteuerungseinstellungen schließt das wiederholte Bestimmen der Werte einer Proportionalverstärkungseinstellung (Kp) und einer Integralverstärkungseinstellung (Ki) als Reaktion auf die Motordrehzahl (232), einen aktuellen Kp-Wert und einen aktuellen Ki-Wert ein.

14. Verfahren nach einem der Ansprüche 9 bis 12, wobei mindestens eines der Folgenden erfüllt ist:
die Rückkopplungssteuerungseinstellungen sind nichtlinear in Bezug auf die Motordrehzahl (232); und
der befohlene Ansaugdruck (208) ist ein befohlener Ansaugkrümmerdruck und der Rückkopplungsansaugdruck (238) ist ein Rückkopplungsansaugkrümmerdruck.

## Revendications

1. Système (100) pour commander électroniquement le fonctionnement d'un moteur à combustion interne (10), le système (100) comprenant :
un premier contrôleur de rétroaction (210) conçu pour recevoir en entrées un régime moteur commandé (202) et un régime moteur (232) et en réponse aux entrées fournir une commande d'approvisionnement en carburant du moteur ;
un deuxième contrôleur de rétroaction (220) conçu pour recevoir en entrées une pression d'admission commandée (208) et une pression d'admission de rétroaction (238) et en réponse aux entrées fournir une commande de modification de la synchronisation d'allumage ;
un circuit de commande de pression d'admission conçu pour déterminer la pression d'admission commandée (208) en réponse au régime moteur (232) ; et
un circuit de commande des paramètres du contrôleur de rétroaction conçu pour déterminer de manière répétée des paramètres du contrôleur de rétroaction pour le deuxième contrôleur de rétroaction (220) en réponse au régime moteur (232) et aux paramètres du contrôleur de rétroaction actuels.

2. Système selon la revendication 1 dans lequel la pression d'admission commandée (208) et les paramètres du contrôleur de rétroaction sont sélectionnés pour :
(a) réduire l'efficacité du moteur (10) sous une efficacité de moteur nominale ou une efficacité de moteur maximisée ; et/ou
(b) réduire ou atténuer le suintement d'huile dans une chambre de combustion du moteur (10) ; et/ou
(c) augmenter une pression dans la chambre de combustion durant une course d'admission.

3. Système selon la revendication 1 dans lequel le premier contrôleur de rétroaction (210) est conçu pour fournir une commande de synchronisation d'allumage en réponse aux entrées, et la commande de synchronisation d'allumage est modifiée par un circuit de modification de synchronisation d'allumage à l'aide de la commande de modification de synchronisation d'allumage.

4. Système selon la revendication 1 dans lequel le circuit de commande de pression d'admission est conçu pour déterminer la pression d'admission commandée (208) en réponse à une ou aux deux d'une température de turbocompresseur et d'un couple de moteur ou d'une entrée d'approvisionnement en carburant.

5. Système selon l'une quelconque des revendications 1 à 4 dans lequel soit :
(a) le deuxième contrôleur de rétroaction (220) est un contrôleur proportionnelintégral (PI) et le circuit de commande des paramètres du contrôleur de rétroaction est conçu pour déterminer de manière répétée des valeurs d'un paramètre de gain proportionnel (Kp) et d'un paramètre de gain intégral (Ki) en réponse au régime moteur (232), à une valeur Kp actuelle et une valeur Ki actuelle, ou
(b) le deuxième contrôleur de rétroaction (220) est un contrôleur proportionnelintégral-dérivé (PID) et le circuit de commande des paramètres du contrôleur de rétroaction est conçu pour déterminer de manière répétée des valeurs d'un paramètre de gain proportionnel (Kp), d'un paramètre de gain intégral (Ki) et d'un paramètre de gain dérivée (Kd) en réponse à l'entrée de régime moteur, à une valeur Kp actuelle, une valeur Ki actuelle et une valeur Kd actuelle.

6. Système selon l'une quelconque des revendications 1 à 4 dans lequel :
les paramètres du contrôleur de rétroaction sont non linéaires par rapport au régime moteur (232) ; et/ou
la pression d'admission commandée est une pression d'admission commandée du collecteur et la pression d'admission de rétroaction est une pression d'admission de rétroaction du collecteur.

7. Système selon l'une quelconque des revendications 1 à 4 comprenant en outre le système de moteur à combustion interne (100).

8. Système selon la revendication 7 dans lequel le système de moteur à combustion interne (100) comprend un moteur à allumage par étincelle comprenant une ou plusieurs bougies d'allumage.

9. Procédé pour commander électroniquement le fonctionnement d'un moteur à combustion interne (202), le procédé comprenant les étapes consistant à :
faire fonctionner un premier contrôleur de rétroaction (210) pour recevoir en entrées un régime moteur commandé (202) et un régime moteur (232) et en réponse aux entrées fournir une commande d'approvisionnement en carburant du moteur ;
faire fonctionne un deuxième contrôleur de rétroaction (220) pour recevoir en entrées une pression d'admission commandée (208) et une pression d'admission de rétroaction (238) et en réponse aux entrées fournir une commande de modification de la synchronisation d'allumage ;
faire fonctionner un circuit de commande de pression d'admission pour déterminer la pression d'admission commandée (208) en réponse au régime moteur (232) ; et
faire fonctionner un circuit de commande des paramètres du contrôleur de rétroaction pour déterminer de manière répétée des paramètres du contrôleur de rétroaction pour le deuxième contrôleur de rétroaction (220) en réponse au régime moteur (232) et aux paramètres du contrôleur de rétroaction actuels.

10. Procédé selon la revendication 9, dans lequel le fonctionnement du premier contrôleur de rétroaction (210), du deuxième contrôleur de rétroaction (220), du circuit de commande de pression d'admission et du deuxième circuit de commande est efficace pour :
(a) réduire l'efficacité du moteur (10) sous une efficacité de moteur nominale ou une efficacité de moteur maximisée ; et/ou
(b) réduire ou atténuer le suintement d'huile dans une chambre de combustion du moteur (10) ; et/ou
(c) augmenter une pression dans la chambre de combustion durant une course d'admission.

11. Procédé selon la revendication 9, dans lequel le fait de faire fonctionner le premier contrôleur de rétroaction (210) inclut la fourniture d'une commande de synchronisation d'allumage en réponse aux entrées, et une modification de la commande de synchronisation d'allumage à l'aide de la commande de modification de synchronisation d'allumage.

12. Procédé selon la revendication 10 dans lequel le fait de faire fonctionner le circuit de commande de pression d'admission inclut une détermination de la pression d'admission commandée (208) en réponse à une ou aux deux d'une température de turbocompresseur et d'un couple de moteur ou d'une entrée d'approvisionnement en carburant.

13. Procédé selon l'une quelconque des revendications 9 à 12 dans lequel :
le fait de faire fonctionner le circuit de commande des paramètres du contrôleur de rétroaction inclut de déterminer de manière répétée des paramètres du contrôleur de rétroaction pour le deuxième contrôleur de rétroaction (220) en réponse à l'entrée de régime moteur et aux paramètres du contrôleur de rétroaction actuels ; et/ou
le fait de faire fonctionner le circuit de commande des paramètres du contrôleur de rétroaction inclut de déterminer de manière répétée des valeurs d'un paramètre de gain proportionnel (Kp) et d'un paramètre de gain intégral (Ki) en réponse au régime moteur (232), à une valeur Kp actuelle et une valeur Ki actuelle.

14. Procédé selon l'une quelconque des revendications 9 à 12 dans lequel :
les paramètres de contrôleur de rétroaction sont non linéaires par rapport au régime moteur (232) ; et/ou
la pression d'admission commandée (208) est une pression de collecteur commandée et la pression d'admission de rétroaction (238) est une pression de collecteur d'admission de rétroaction.
